# FASCICULE DE BREVET EUROPEEN

(11) **EP 2 776 319 B1**
(45) Date de publication et mention de la délivrance du brevet: **06.04.2016**
(21) Numéro de dépôt: 12794393.4
(22) Date de dépôt: 29.10.2012
(51) Int. Cl.: B64D 33/08, F02C 9/18, F02C 7/20, F02C 7/04, F02C 6/08, F01D 25/24

(54) **PANNEAU COMPOSITE À ÉCOPE DE PRÉLÈVEMENT INTÉGRÉE**
VERBUNDPLATTE MIT INTEGRIERTER LUFTEINLASSÖFFNUNG.
COMPOSITE PANEL WITH INTEGRATED AIR INTAKE SCOOP

(30) Priorité: 10.11.2011 FR 1160243
(43) Date de publication de la demande: 17.09.2014
(73) Titulaire: Aircelle, 76700 Gonfreville l'Orcher (FR)
(72) Inventeur: LAURANT, Franck, F-76430 St Romain De Colbosc (FR); BELLET, François, F-76490 St Wandrille Rancon (FR); JORET, Jean-Philippe, F-27210 Beuzeville (FR)
(74) Mandataire: Gaillarde, Frédéric F. Ch.
(86) Numéro de dépôt international: PCT/FR2012/052484
(87) Numéro de publication internationale: WO 2013/068671

(56) Documents cités:
- EP-A2- 2 226 473
- FR-A1- 2 879 564
- FR-A1- 2 915 461
- US-A- 6 050 527

## Description

La présente invention se rapporte à une écope de nacelle de turboréacteur intégrée à un panneau composite.

Un aéronef est propulsé par plusieurs turboréacteurs logés chacun dans une nacelle. Chaque nacelle abrite également un ensemble de dispositifs annexes liés à son fonctionnement et assurant diverses fonctions lorsque le turboréacteur est en fonctionnement ou à l'arrêt.

Une nacelle présente généralement une structure tubulaire comprenant une entrée d'air en avant d'un turboréacteur, une section médiane destinée à entourer une soufflante du turboréacteur, une section arrière pouvant éventuellement embarquer des moyens d'inversion de poussée et destinée à entourer la chambre de combustion du turboréacteur, et une tuyère d'éjection dont la sortie est située en aval du turboréacteur.

Les nacelles modernes sont souvent destinées à abriter un turboréacteur double flux apte à générer par l'intermédiaire des pales de la soufflante en rotation un flux d'air chaud (également appelé flux primaire) issu de la chambre de combustion du turboréacteur.

Une nacelle présente classiquement une structure externe fixe dite Outer Fixed Structure (OFS), qui définit avec une structure interne fixe concentrique, dite Inner Fixed Structure (IFS), comportant un capot entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur.

Les flux primaire et secondaire sont éjectés du turboréacteur à l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou d'un mât rattaché au turboréacteur de la nacelle.

La section arrière de la structure externe de la nacelle est usuelle formée de deux capots sensiblement hémicylindrique, de part et d'autre d'un plan vertical longitudinal de symétrie de la nacelle, et montés mobiles de manière à pouvoir se déployer entre une position de fonctionnement et une position de maintenance qui donne accès au turboréacteur.

Il en va de même pour la section médiane qui présente également la capacité de s'ouvrir pour permettre un accès à la soufflante.

On constate donc qu'un ensemble propulseur d'avion intègre des sous-ensembles fonctionnels qui possèdent des mouvements relatifs et entre lesquels il convient de gérer l'étanchéité.

Plus particulièrement, il convient de noter que les sections arrière et médiane comprenant respectivement des sous-ensembles servant de carter à la tuyère et de carter à la soufflante, zones de l'ensemble propulsif jouant un rôle important dans la génération et l'orientation des flux.

Afin d'alimenter les circuits de distribution d'air de l'avion (climatisation, pressurisation cabine,...) de l'air est prélevé au niveau du compresseur du turboréacteur. Cet air étant bien évidemment trop chaud et doit être refroidi. Il est notamment refroidi par un dispositif de pré-refroidissement (« pre-cooler ») utilisant de l'air froid prélevé par une écope dite écope du pré-cooler.

D'autre part, les sous-ensembles de la nacelle sont soumis à des températures qui entraînent leur dilatation et causent des déformations, notamment radiales.

Ainsi, alors que l'intervalle entre le carter de soufflante et les aubes de ladite soufflante doit être maitrisé pour assurer une efficacité optimale de la soufflante, une dilatation radiale du carter risque d'entraîner une augmentation de cet intervalle et par voie de conséquence une diminution des performances de soufflante puisque plus d'air non compressé s'échappera par ce jeu.

Dans le but de prévenir cet inconvénient, le carter de soufflante est équipé d'un circuit de distribution d'air froid à sa surface appelé TCC pour « Turbine Clearance Control ». Cet air froid est généralement prélevé par une écope situé dans une zone de circulation du flux froid (zone veine) apellée écope TCC.

Ce principe s'applique également à d'autres parties de la nacelle, telle que la tuyère par exemple.

L'écope de prélèvement est donc de manière générale destinée à assurer l'acheminement de l'air prélevé vers le circuit de refroidissement.

Pour ce faire l'écope se présente sous la forme d'un conduit sensiblement tubulaire et présentant une ouverture de prélèvement profilée permettant de limitée les perturbations aérodynamiques induites par le prélèvement. Le document FR2879564, qui est considéré l'état de la technique plus proche, montre une telle écope.

Elle est insérée à travers une paroi exposée au flux d'air froid, son ouverture de prélèvement débouchant dans la zone de circulation du flux d'air prélevé. Il pourra notamment s'agir d'un panneau externe de l'IFS orientée vers la veine de circulation du flux secondaire.

Dans le cas d'un panneau réalisé à partir d'un alliage métallique, l'écope est généralement introduite dans une découpe et présente au niveau de son ouverture de prélèvement un rebord périphérique destiné à assurer la continuité aérodynamique avec la surface du panneau et le rattachement de l'écope à ce panneau, par rivetage ou soudure.

La généralisation des matériaux composites dans la fabrication des panneaux de nacelles pose une difficulté majeure à la mise en place de ces écopes.

En effet, actuellement, la structure de l'écope doit être rapportée sur le panneau de la même manière que pour un panneau en alliage métallique, à savoir par la réalisation dans le panneau d'une découpe sensiblement à la forme de l'écope.

Cependant, il n'est généralement pas souhaitable de pratiquer des découpes dans un panneau composite, de telles découpes entraînant des ruptures dans les fibres et la structure interne du panneau composite (âme), ce qui est susceptible d'affecter son intégrité et sa tenue mécanique.

La présence de moyens de fixation traversant même partiellement la structure du panneau composite n'est pas non plus souhaitable pour les mêmes raisons.

Ainsi, il existe un besoin pour une solution permettant de résoudre au moins partiellement les inconvénients mentionnés précédemment et permettant la mis en place d'une écope de prélèvement à travers un panneau en matériau composite.

Pour ce faire, la présente invention se rapporte à un panneau composite comprenant au moins une peau interne et une peau externe, et présentant au moins un orifice destiné à recevoir une écope de prélèvement formant conduit et dont un orifice de prélèvement débouche au niveau de la peau externe, caractérisé en ce que ladite peau externe est conformée de manière à constituer au niveau de l'orifice au moins une partie d'une surface d'écoulement de l'écope de prélèvement.

Ainsi, en réalisant une partie de la surface d'écoulement de l'écope de prélèvement directement à partir du panneau composite lui-même, et plus précisément par mise en forme de sa peau externe selon un profil adapté, on obtient une meilleure intégration de ladite écope avec un tel panneau composite. Il est ainsi possible de limiter les découpes et par voie de conséquences les atteintes à l'intégrité structurelle du panneau composite.

Cela permet également d'assurer une continuité aérodynamique optimale en limitant les jeux et écarts entre la structure de panneau et l'écope.

Il convient de noter que bien que l'invention soit introduite en référence aux écopes « pre-cooler » et TCC, elle n'y est pas limitée et est susceptible de concerner tout type d'écope de prélèvement d'air, et plus particulièrement les écopes devant être insérées à travers un panneau composite tel qu'un panneau d'IFS.

Avantageusement, la peau externe formant surface d'écoulement de l'écope est mise en forme par enfoncement et courbure de la peau externe dans l'épaisseur vers l'intérieur du panneau.

La partie complémentaire pour être rapportée et fixée par tout moyen (collage, rivetage, ...) et réalisée à partir de tout matériau approprié.

De manière préférentielle, la peau externe est recourbée sur au moins l'épaisseur du panneau.

Selon une variante préférée de réalisation, la surface d'écoulement formée par la peau externe s'étend sur toute la périphérie de l'orifice destiné à l'écope de prélèvement. Ainsi, la totalité de l'orifice de prélèvement de l'écope est réalisé à partir du panneau lui-même, ce qui assure une intégration et un écoulement optimal.

Avantageusement, l'écope de prélèvement est totalement mise en forme à partir de la peau externe et le cas échéant de la peau interne. Cela pourra notamment être le cas lorsque la partie de l'écope réalisée à partir du panneau composite dépasse l'épaisseur dudit panneau. La peau interne assurera alors le pourtour externe de la partie d'écope, la peau externe assurant le pourtour interne du conduit formé.

Selon une mode de réalisation, le panneau comprend au moins une âme disposée entre la peau interne et la peau externe.

Selon une variante l'orifice destiné à l'écope de prélèvement est situé dans une zone dudit panneau comprenant l'âme, dite zone sandwich.

Alternativement et lorsque le panneau composite ne comprend pas d'âme en tout point, l'orifice destiné à l'écope de prélèvement peut être situé dans une zone dudit panneau ne comprenant pas d'âme, dite zone monolithique.

La présente invention se rapporte également à un panneau composite comprenant une écope de prélèvement, caractérisé en ce que le panneau composite est un panneau selon l'invention.

Avantageusement, l'écope de prélèvement comprenant une bordure de fixation rapportée sur la peau interne dudit panneau.

De tels panneaux pourront être notamment des panneaux de structure interne de nacelle de turboréacteur destinés à entourer la chambre de combustion dudit turboréacteur.

La présente invention sera mieux comprise à la lumière de la description détaillé qui suit en regard du dessin annexé dans lequel :
- la figure 1 est une représentation schématique d'un panneau composite prévu pour recevoir une écope de prélèvement et préparé selon l'art antérieur,
- la figure 2 est une représentation schématique en coupe transversale d'un panneau composite selon l'invention prévu pour recevoir une écope de prélèvement dans une zone monolithique dudit panneau.
- la figure 3 est une représentation schématique en vue de dessus d'un panneau composite selon l'invention comprenant une écope de prélèvement installé dans zone sandwich dudit panneau,
- la figure 4 est une représentation schématique en vue de dessous correspondant à la figure 3,
- la figure 5 est une représentation schématique en vue de dessous correspondant à la figure 4 sans la partie d'écope de prélèvement,
- les figures 6 et 7 sont des représentations schématiques respectivement en vue de dessus et en vue de dessous d'un panneau composite selon l'invention comprenant une écope de prélèvement intégrée au panneau et réalisé intégralement à partir dudit panneau,
- La figure 8 est une représentation schématique en coupe transversale du panneau des figures 6 et 7.

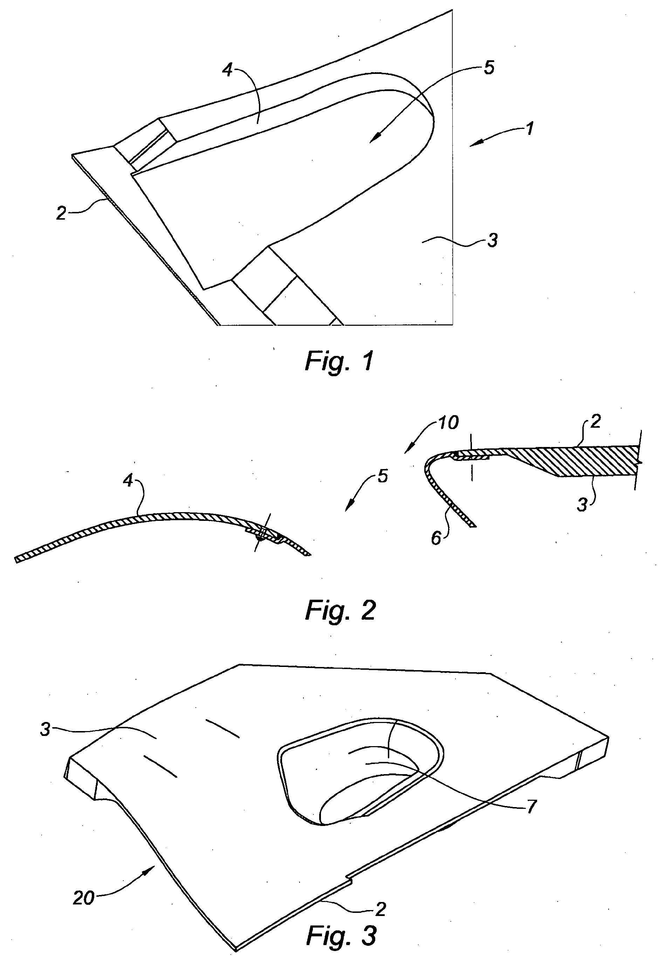

Comme représenté à la figure 1, un panneau composite 1 comprend classiquement une peau externe 2 et une peau interne 3 et éventuellement une âme 4.

Les parties du panneau 1 comprenant l'âme 4 sont appelées zone sandwich. Les parties du panneau 1 ne comprenant pas d'âme sont appelées zone monolithique. Il s'agit en général de portions terminales et de bords du panneau 1.

Ce panneau composite 1 présente un orifice 5 destiné à recevoir une écope de prélèvement d'air (non visible) formant conduit et dont un orifice de prélèvement débouche au niveau de la peau externe.

Conformément à l'art antérieur et la pratique actuelle, cet orifice est réalisé par simple découpe du panneau 1 entraînant les inconvénients mentionnés précédemment : mise à nu de l'âme 4 dans les zones sandwich, rupture de la structure de la peau externe 2 et de la peau interne 3 et plus généralement rupture de l'intégrité du panneau composite, écarts et jeux dans l'ajustement de l'écope sur le panneau, fixations induisant des perturbations aérodynamiques.

Pour pallier ces inconvénients et Conformément à l'invention, le panneau composite sera réalisé en conformant la peau externe de manière à ce qu'elle constitue au niveau de l'orifice au moins une partie d'une surface d'écoulement de l'écope de prélèvement.

Les figures 2 à 7 montrent divers mode de réalisation de panneaux composites pour écope selon l'invention.

La figure 2 est une vue en coupe transversale d'un panneau composite 10 présentant un orifice 5 pour l'écope de prélèvement situé dans une zone monolithique. Plus précisément, l'orifice 5 est délimité par un rebord périphérique formé à partir de la peau interne 3 et de la peau externe 2 sans âme 4 sandwich.

Conformément à l'invention, ce rebord périphérique, et donc la peau externe correspondante, est conformée pour constituer au niveau d'une zone amont du panneau 10 destiné à être orientée vers l'amont de l'écoulement d'air à prélever, une surface d'écoulement vers l'orifice 5 recevant l'écope. Cette surface d'écoulement forme donc une partie de la surface d'écoulement de l'écope.

La structure 7 restant de l'écope pourra être rapportée dans l'orifice 5 sur le panneau 10 et fixée en aval de l'orifice à l'aide d'une collerette 6 qui sera maintenue par soyage sur le rebord de l'orifice 10.

Bien évidemment, cette collerette ne constitue qu'un exemple de fixation possible et tout mode de fixation connu de l'homme du métier est envisageable (rivetage, boulonnage, collage, ...).

Ainsi, l'écope est partiellement intégrée au panneau composite et le prélèvement d'air s'en trouve amélioré.

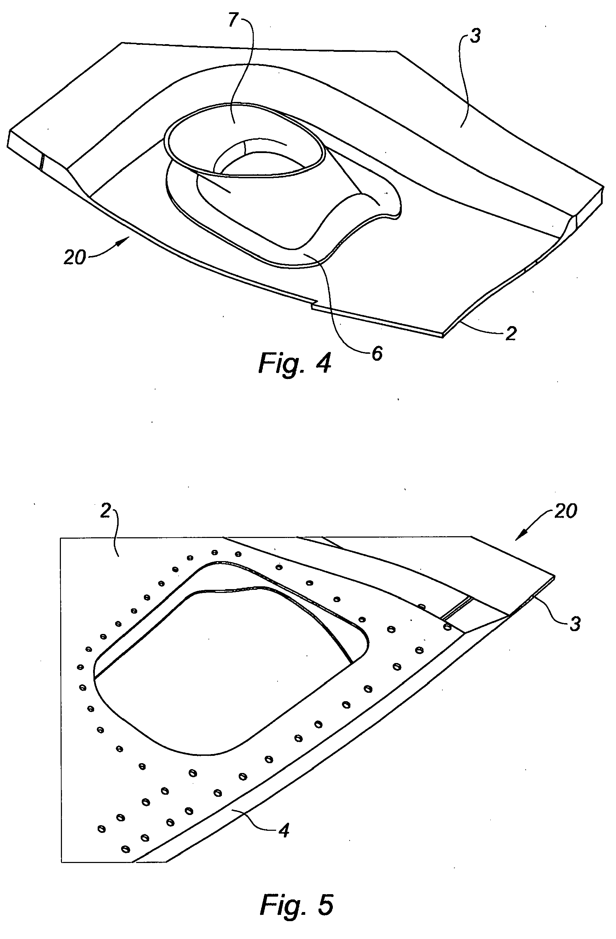

Les figures 3 et 4 montrent un panneau composite 20 similaire à celui de la figure 2 à la différence que l'orifice 5 de l'écope 7 est situé dans une zone sandwich à âme 4. La figure 3 montre la peau externe 3 recourbée pour plonger dans l'épaisseur du panneau 20 assurant ainsi une continuité aérodynamique avec le conduit de prélèvement que forme l'écope 7.

La figure 5 correspond au mode de réalisation des figures 3 et 4 sans la structure d'écope 7 insérée dans le panneau. On remarquera l'épaisseur réduire entre la peau externe 2 et la peau interne 3 au niveau d'une zone amont de l'orifice destinée à être orientée dans le sens de l'écoulement d'air à prélever.

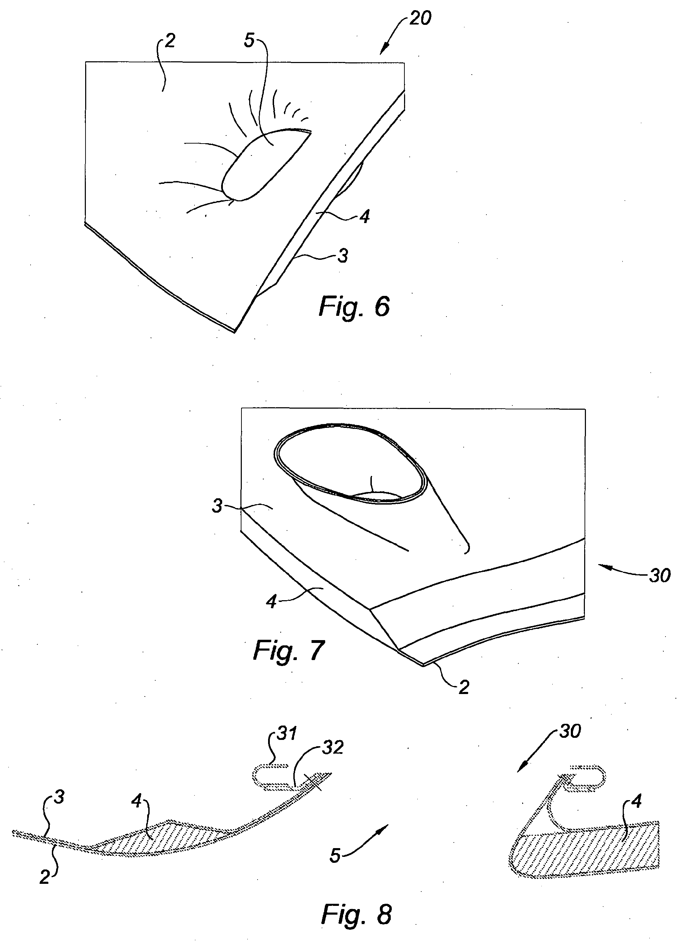

Les figures 6 et 7 montrent un panneau composite 30 dans lequel la structure d'écope est entièrement réalisée à partir des peaux externe 2 et interne 3 du panneau 30 qui se rejoignent pour former le conduit de l'écope de prélèvement.

Ainsi, l'écope est intégrée au panneau et la surface d'écoulement est aérodynamiquement optimale.

La figure 8 montre plus précisément la structure du panneau 30. On notera que le conduit formée par l'écope est équipée d'un joint périphérique 31 supportée par une bride de fixation 32 fixée dans les peaux interne 2 et externe 3 du panneau 30.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Panneau composite (10, 20, 30) comprenant au moins une peau interne (3) et une peau externe (2), et présentant au moins un orifice (5) destiné à recevoir une écope (7) de prélèvement formant conduit et dont un orifice de prélèvement débouche au niveau de la peau externe, **caractérisé en ce que** ladite peau externe est conformée de manière à constituer au niveau de l'orifice au moins une partie d'une surface d'écoulement de l'écope de prélèvement.

2. Panneau composite (10, 20, 30) selon la revendication 1, **caractérisé en ce que** la peau externe (2) formant surface d'écoulement de l'écope est mise en forme par enfoncement et courbure de la peau externe dans l'épaisseur vers l'intérieur du panneau.

3. Panneau (10, 20, 30) composite selon la revendication 2, **caractérisé en ce que** la peau externe (3) est recourbée sur au moins l'épaisseur du panneau.

4. Panneau composite (30) selon l'une quelconque des revendications 1 à 3, **caractérisé en ce que** la surface d'écoulement formée par la peau externe (3) s'étend sur toute la périphérie de l'orifice destiné à l'écope de prélèvement.

5. Panneau (30) composite selon la revendication 4, **caractérisé en ce que** l'écope de prélèvement est totalement mise en forme à partir de la peau externe (2) et le cas échéant de la peau interne (3).

6. Panneau (20, 30) composite selon l'une quelconque des revendications 1 à 5 **caractérisé en ce qu'**il comprend au moins une âme (4) disposée entre la peau interne (3) et la peau externe (2).

7. Panneau composite (20, 30) selon la revendication 6, **caractérisé en ce que** l'orifice (5) destiné à l'écope de prélèvement (7) est situé dans une zone dudit panneau comprenant l'âme (4), dite zone sandwich.

8. Panneau (10) selon l'une quelconque des revendications 1 à 5, **caractérisé en ce que** l'orifice (5) destiné à l'écope de prélèvement (7) est situé dans une zone dudit panneau ne comprenant pas d'âme (4), dite zone monolithique.

9. Panneau composite (10, 20, 30) comprenant une écope de prélèvement (7), **caractérisé en ce que** le panneau composite est un panneau selon l'une quelconque des revendications 1 à 8.

10. Panneau composite (10, 20) selon la revendication 9, **caractérisé en ce que** l'écope de prélèvement (7) comprenant une bordure de fixation (6) rapportée sur la peau interne (3) dudit panneau.

## Patentansprüche

1. Verbundplatte (10, 20, 30) aus mindestens einer Innenhaut (3) und einer Außenhaut (2) und aufweisend mindestens ein Loch (5), das ausgelegt ist, um eine Lufteinlassöffnung (7) aufzunehmen, die eine Leitung bildet, und wobei ein Einlassloch auf der Ebene der Außenhaut mündet, **dadurch gekennzeichnet, dass** die Außenhaut derart geformt ist, dass sie auf der Ebene des Lochs mindestens einen Teil einer Abflussfläche der Lufteinlassöffnung bildet.

2. Verbundplatte (10, 20, 30) nach Anspruch 1, **dadurch gekennzeichnet, dass** die Außenhaut (2), die eine Abflussfläche der Einlassöffnung bildet, durch Pressen und Krümmen der Außenhaut in der Dicke hin zur Innenseite der Platte in Form gebracht ist.

3. Verbundplatte (10, 20, 30) nach Anspruch 2, **dadurch gekennzeichnet, dass** die Außenhaut (3) auf mindestens der Dicke der Platte gekrümmt ist.

4. Verbundplatte (30) nach einem der Ansprüche 1 bis 3, **dadurch gekennzeichnet, dass** sich die Abflussfläche, die durch die Außenhaut (3) gebildet ist, auf dem gesamten Umfang der Öffnung erstreckt, die für die Lufteinlassöffnung bestimmt ist.

5. Verbundplatte (30) nach Anspruch 4, **dadurch gekennzeichnet, dass** die Lufteinlassöffnung vollständig auf der Grundlage der Außenhaut (2) und gegebenenfalls der Innenhaut (3) in Form gebracht ist.

6. Verbundplatte (20, 30) nach einem der Ansprüche 1 bis 5, **dadurch gekennzeichnet, dass** sie mindestens einen Kern (4) umfasst, der zwischen der Innenhaut (3) und der Außenhaut (2) angeordnet ist.

7. Verbundplatte (20, 30) nach Anspruch 6, **dadurch gekennzeichnet, dass** sich das Loch (5), das für Lufteinlassöffnung (7) ausgelegt ist, in einem Bereich der Platte befindet, der den Kern (4) umfasst, genannt Sandwich-Bereich.

8. Platte (10) nach einem der Ansprüche 1 bis 5, **dadurch gekennzeichnet, dass** sich das Loch (5), das für die Lufteinlassöffnung (7) ausgelegt ist, in einem Bereich der Platte befindet, der nicht den Kern (4) umfasst, genannt monolithischer Bereich.

9. Verbundplatte (10, 20, 30), umfassend eine Lufteinlassöffnung (7), **dadurch gekennzeichnet, dass** die Verbundplatte eine Platte nach einem der Ansprüche 1 bis 8 ist.

10. Verbundplatte (10, 20) nach Anspruch 9, **dadurch gekennzeichnet, dass** die Lufteinlassöffnung (7) einen Befestigungsrand (6) umfasst, der auf der Innenhaut (3) der Platte befestigt ist.

## Claims

1. A composite panel (10, 20, 30) comprising at least an inner skin (3) and an outer skin (2), and having at least one port (5) intended to receive a sampling scoop (7) forming a duct, a sampling port of which leads into the outer skin, **characterized in that** said outer skin is shaped so as to form at the port at least a portion of the flow surface of the sampling scoop.

2. The composite panel (10, 20, 30) according to claim 1, **characterized in that** the outer skin (2) forming a flow surface of the scoop is formed by pressing and bending the outer skin in the thickness toward the inside of the panel.

3. The composite panel (10, 20, 30) according to claim 2, **characterized in that** the outer skin (3) is curved over at least the panel thickness.

4. The composite panel (30) according to any one of claims 1 to 3, **characterized in that** the flow surface formed by the outer skin (3) extends over the entire periphery of the port intended for the sampling scoop.

5. The composite panel (30) according to claim 4, **characterized in that** the sampling scoop is fully formed from the outer skin (2) and, where appropriate, the inner skin (3).

6. The composite panel (20, 30) according to any one of claims 1 to 5, **characterized in that** it comprises at least one core (4) disposed between the inner skin (3) and the outer skin (2).

7. The composite panel (20, 30) according to claim 6, **characterized in that** the port (5) intended for the sampling scoop (7) is located in an area of said panel comprising the core (4), called sandwich area.

8. The panel (10) according to any one of claims 1 to 5, **characterized in that** the port (5) intended for the sampling scoop (7) is located in an area of said panel not comprising any core (4), called monolithic area.

9. The composite panel (10, 20, 30) comprising a sampling scoop (7), **characterized in that** the composite panel is a panel according to any one of claims 1 to 8.

10. The composite panel (10, 20) according to claim 9, **characterized in that** the sampling scoop (7) comprises a fixing border (6) added to the inner skin (3) of said panel.
